# EUROPEAN PATENT SPECIFICATION

(11) **EP 2 921 394 B1**
(45) Date of publication and mention of the grant of the patent: **05.10.2016**
(21) Application number: 15156900.1
(22) Date of filing: 27.02.2015
(51) Int. Cl.: B62K 25/28, B60K 5/12, B62K 11/10

(54) **Suspension device for saddle-ride-type vehicle**
Aufhängungsvorrichtung für Grätschsitzfahrzeug
Dispositif de suspension pour véhicule à monture de selle

(30) Priority: 20.03.2014 JP 2014058270
(43) Date of publication of application: 23.09.2015
(73) Proprietor: Honda Motor Co., Ltd., Minato-ku Tokyo 107-8556 (JP)
(72) Inventor: Atsuchi, Michio, Saitama 351-0193 (JP); Yokouchi, Kohei, Saitama 351-0193 (JP)
(74) Representative: Beder, Jens

(56) References cited:
- EP-A1- 2 502 816
- JP-A- 2007 091 204
- JP-A- 2011 020 524

## Description

The present invention relates to a suspension device for a saddle-ride-type vehicle, and more particularly to a suspension device for a saddle-ride-type vehicle where a unit-swing-type engine is mounted on a vehicle body frame in a suspended manner.

With respect to a conventional suspension device for a saddle-ride-type vehicle, for example, there has been known the structure where the suspension device includes: a down frame extending downwardly from a head pipe; a lower frame extending rearwardly from a lower end of the down frame; and a rear frame extending upwardly and rearwardly from a rear end of the lower frame, a link mechanism which connects the lower frame and a lower portion of a unit-swing-type engine to each other is provided, and the unit-swing-type engine is mounted on a vehicle body frame in a suspended manner by way of the link mechanism (see JP-A-2011-20524, for example).

As described in Patent Literature 1, in the structure where the engine is mounted in a suspended manner on a lower side of the engine, when a length of a link of the link mechanism is excessively long, the link mechanism effects traveling feeling. In view of the above, to suppress the length of the link from becoming excessively long, the structure has been currently adopted where the link mechanism is supported by mounting a large-sized bracket or a sub frame on a vehicle body frame side.

However, when the large-sized bracket or the sub frame is mounted on a vehicle body frame side, as in the case of the conventional structure, there arises a drawback that the suspension structure becomes large-sized.

The invention has been made in view of the above-mentioned circumstances, and it is an object of the invention to provide a suspension device for a saddle-ride-type vehicle which can suppress large-sizing of a bracket by suppressing a length of a link mechanism in the longitudinal direction of a vehicle body from becoming long without mounting a large-sized bracket or a sub frame on a vehicle body frame side.

To achieve the above-mentioned object, the invention according to claim 1 is directed to a suspension device for a saddle-ride-type vehicle which includes: a vehicle body frame having a down frame extending downwardly from a head pipe, a lower frame extending rearwardly from a lower end of the down frame, and a rear frame extending upwardly and rearwardly from a rear end of the lower frame; a unit-swing-type engine which imparts a drive force to a rear wheel; and a link mechanism for mounting the unit-swing-type engine on the vehicle body frame in a suspending manner, wherein
the link mechanism includes:
a first link member having a first link upper end portion thereof rotatably supported on the vehicle body frame;
a second link member having a second link front end portion thereof rotatably supported on a first link lower end portion of the first link member; and
a third link member having a third link lower end portion thereof rotatably supported on a second link rear end portion of the second link member,
a pivot portion of the unit-swing-type engine is supported on the second link rear end portion and the third link lower end portion,
a third link upper end portion of the third link member and a third link intermediate portion disposed between the third link upper end portion and the third link lower end portion are supported on the vehicle body frame,
the third link intermediate portion is formed in a frontwardly projecting manner, and
an intermediate portion support shaft which supports the third link intermediate portion is arranged in front of a common tangent which is in contact with an outer periphery of an upper end support portion of the third link upper end portion and an outer periphery of a lower end support portion of the third link lower end portion on a front side in the longitudinal direction of the vehicle body.

The invention according to claim 2 is, in addition to the constitution described in claim 1, characterized in that a straight connecting line which connects the intermediate portion support shaft and the upper end portion support shaft of the upper end support portion extends substantially along a rear frame inclined portion extending toward a position above and behind the rear frame.

The invention according to claim 3 is, in addition to the constitution described in claim 1 or claim 2, characterized in that the pair of left and right third link members is provided, and a cooling water pump is disposed right behind the third link members.

The invention according to claim 4 is, in addition to the constitution described in claim 3, characterized in that a radiator hose extending from the cooling water pump is arranged such that the radiator hose passes along a vehicle body inner side of the third link members and a portion of the radiator hose overlaps with the third link member as viewed in a top plan view.

The invention according to claim 5 is directed to a suspension device for a saddle-ride-type vehicle which includes: a vehicle body frame having a down frame extending downwardly from a head pipe, a lower frame extending rearwardly from a lower end of the down frame, and a rear frame extending upwardly and rearwardly from a rear end of the lower frame; a unit-swing-type engine which imparts a drive force to a rear wheel; and a link mechanism for mounting the unit-swing-type engine on the vehicle body frame in a suspending manner, wherein
- the link mechanism includes:
   a pair of left and right first link members each having a first link upper end portion thereof rotatably supported on the vehicle body frame;
   a pair of left and right second link members each having a second link front end portion thereof rotatably supported on a first link lower end portion of the first link member; and
   a pair of left and right third link members each having a third link lower end portion thereof rotatably supported on a second link rear end portion of the second link member,
   a pivot portion of the unit-swing-type engine is supported on the second link rear end portion,
   one third link member has a third link upper end portion thereof and a third link intermediate portion thereof disposed between the third link upper end portion and the third link lower end portion supported on the vehicle body frame,
   the third link intermediate portion is formed in a frontwardly projecting manner,
   an intermediate portion support shaft which supports the third link intermediate portion is arranged in front of a common tangent which is in contact with an outer periphery of an upper end support portion of the third link upper end portion and an outer periphery of a lower end support portion of the third link lower end portion on a front side in the longitudinal direction of the vehicle body,
   the other third link member is formed of a bent arm which is bent such that the third link intermediate portion between the third link upper end portion and the third link lower end portion projects toward a front side, and
   an intermediate rear end portion of the third link intermediate portion is arranged in front of a common tangent which is in contact with an outer periphery of the upper end support portion of the third link upper end portion and an outer periphery of the lower end support portion of the third link lower end portion on a front side in the longitudinal direction of the vehicle body.

The invention according to claim 6 is, in addition to the constitution described in claim 5, characterized in that the bent arm is disposed on a side opposite to a side where a rear wheel drive transmission part of the unit-swing-type engine is arranged in a vehicle width direction.

The invention according to claim 7 is, in addition to the constitution described in claim 5 or claim 6, characterized in that a modulus of elasticity of an elastic member mounted in the third link member is set smaller than a modulus of elasticity of an elastic member on a side where the rear wheel drive transmission part is arranged in a vehicle width direction.

According to the invention called for in claim 1, in the third link member of the link mechanism for mounting the unit-swing-type engine in a suspending manner, the third link intermediate portion is formed as a bent portion which projects toward a front side in the longitudinal direction of the vehicle body. Further, the intermediate portion support shaft which supports the third link intermediate portion is arranged in front of the common tangent which is in contact with the outer periphery of the upper end support portion of the third link upper end portion and the outer periphery of the lower end support portion of the third link lower end portion on a front side in the longitudinal direction of the vehicle body. Accordingly, the third link member of the link mechanism is bent toward a front side of the vehicle above the second link member extending in the longitudinal direction of the vehicle body thus being arranged compactly in a small space. Accordingly, the place where the link mechanism is mounted is positioned close to the front side of the vehicle body and hence, it is unnecessary to adopt the structure where a bracket which forms a mounting portion largely extends toward a rear side of the vehicle whereby the mounting portion can be minimized thus avoiding large-sizing of the bracket.

According to the invention called for in claim 2, the straight connecting line which connects the intermediate portion support shaft and the upper end portion support shaft of the upper end support portion which are the portions where the third link member of the link mechanism is mounted on the bracket to each other extends substantially along the rear frame inclined portion extending toward the position above and behind the rear frame. Accordingly, the distance from the rear frame to the upper end portion support shaft and the distance from the rear frame to the intermediate portion support shaft can be set substantially equal and hence, unlike the prior art, it is unnecessary to adopt large-sizing for increasing the rigidity of the whole bracket in conformity with the longer distance from the rear frame thus realizing downsizing and the reduction of weight of the bracket.

According to the invention called for in claim 3, by providing the pair of left and right third link members, a force necessary for supporting the engine can be made uniform by dispersing the force in the vehicle body width direction and hence, the weight of the vehicle body frame and the weight of the bracket can be reduced. Further, the cooling water pump is positioned right behind the third link member and hence, the whole engine can be compactly arranged on a front side. This structural arrangement contributes to the downsizing of the whole suspension structure and the downsizing of the vehicle.

According to the invention called for in claim 4, the radiator hose extending from the cooling water pump is arranged such that the radiator hose passes the vehicle-body inner side of the third link member and, at the same time, is arranged such that the portion of the radiator hose overlaps with the bent portion of the third link member vertically. Accordingly, a gap in the link mechanism can be effectively utilized and hence, downsizing of the vehicle can be realized.

According to the invention called for in claim 5, with respect to the third link member of the link mechanism for mounting the unit-swing-type engine in a suspending manner, the third link intermediate portion is formed as a bent portion which projects toward a front side in the longitudinal direction of the vehicle body. Further, the third link intermediate portion is arranged in front of the common tangent which is in contact with the outer periphery of the upper end support portion of the third link upper end portion and the outer periphery of the lower end support portion of the third link lower end portion on a front side in the longitudinal direction of the vehicle body. Accordingly, the third link member of the link mechanism is bent toward a front side of the vehicle above the second link member extending in the longitudinal direction of the vehicle body and hence, the third link member can be mounted compactly in a small space and is positioned close to a front side of the vehicle body. Accordingly, it is unnecessary to adopt the structure where a bracket which forms a mounting portion largely extends toward a rear side of the vehicle whereby the mounting portion can be minimized thus avoiding large-sizing of the bracket.

Further, with respect to one of the third link member on a left side and the third link member on a right side, the third link intermediate portion between the third link upper end portion and the third link lower end portion is formed of the bent arm which is bent so as to project frontwardly without being supported on the vehicle body frame and hence, it is unnecessary to provide a member for fixing the third link intermediate portion. This structure also contributes to the reduction of weight of the suspension device.

According to the invention called for in claim 6, the bent arm is disposed on a side opposite to a side where the rear wheel drive transmission part of the unit-swing-type engine is arranged in the vehicle width direction. Accordingly, rigidity of the suspension device for supporting the engine can be increased by providing the structure where the third link intermediate portion is fixed on a left side in the vehicle width direction, for example, where the unit-swing-type engine is arranged. At the same time, a distance between the support portions can be increased by the bent arm provided on a right side in the vehicle width direction and hence, it is possible to impart flexibility to the suspension device whereby it is possible to provide the structure which easily absorbs vibrations.

According to the invention called for in claim 7, a modulus of elasticity of the elastic member mounted in the third link member is set smaller than a modulus of elasticity of the elastic member on a side where the rear wheel drive transmission part is arranged in the vehicle width direction. By making difference in flexibility of the elastic member between the left and right sides in the vehicle width direction, the function of the suspension device for supporting the unit-swing-type engine can be divided into a side where the suspension device exhibits rigidity function and a side where the suspension device exhibits flexibility. This structure contributes to the enhancement of vehicle performance.
Fig. 1 is a side view of a saddle-ride-type vehicle provided with a suspension device according to the invention as viewed from a left side.
Fig. 2 is a left side view of an essential part of a link mechanism in the suspension device of the saddle-ride-type vehicle shown in Fig. 1.
Fig. 3 is a right side view of the essential part of the link mechanism in the suspension device of the saddle-ride-type vehicle shown in Fig. 1.
Fig. 4 is an exploded perspective view of the essential part of the link mechanism in the suspension device of the saddle-ride-type vehicle shown in Fig. 1.
Fig. 5 is a back view with a part broken away of a first link member in the link mechanism shown in Fig. 4 as viewed from behind.
Fig. 6 is a plan view with a part broken away of a second link member in the link mechanism shown in Fig. 4.
Fig. 7 is a plan view with a part broken away of an essential part showing a connection state of the second link member and a pivot portion shown in Fig. 6 as viewed from above.
Fig. 8(a) and Fig.8 (b) are views showing a third link member in the link mechanism shown in Fig. 4, wherein Fig. 8(a) is a perspective view of the third link member on a left side, and Fig. 8(b) is a side view of the third link member on a left side.
Fig. 9 is a plan view with a part broken away showing the link mechanism and an arrangement of a radiator hose according to this embodiment as viewed from above.
Fig. 10 is a right side view of an essential part of a link mechanism in a suspension device of a second embodiment according to the invention.
Fig. 11 is a cross-sectional view of an essential part of a third link member in the link mechanism shown in Fig. 10.

### (First embodiment)

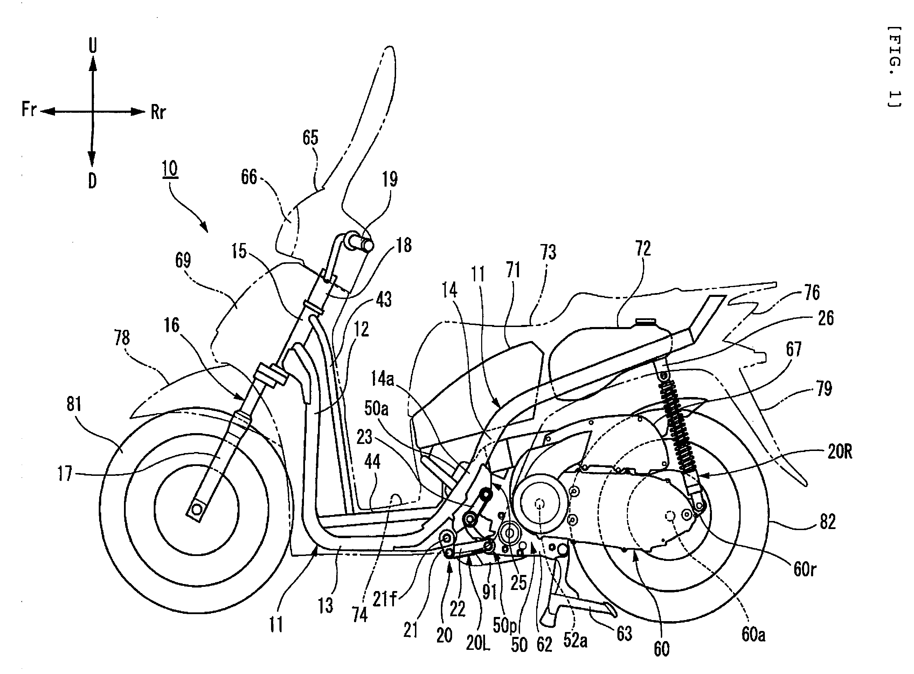

Hereinafter, a scooter-type vehicle which is a saddle-ride-type vehicle according to a first embodiment of the invention is explained by reference to attached drawings Fig. 1 to Fig. 9.

The drawings are viewed in the direction of symbols. In the explanation made hereinafter, the frontward and rearward directions, the left and right directions, and the upward and downward directions are described in accordance with the directions as viewed from a rider. In the drawings, the frontward direction of a vehicle is indicated by symbol Fr, the rearward direction of the vehicle is indicated by symbol Rr, the leftward direction of the vehicle is indicated by symbol L, the rightward direction of the vehicle is indicated by symbol R, the upward direction of the vehicle is indicated by symbol U, and the downward direction of the vehicle is indicated by symbol D.

As shown in Fig. 1, the scooter-type vehicle 10 includes: a vehicle body frame 11 which constitutes a skeleton; a front wheel suspension steering mechanism 16 which is mounted on a front portion of the vehicle body frame 11 for suspending and steering a front wheel 81; a unit-swing-type engine 50 which is connected to a substantially center portion of the vehicle body frame 11 by way of a suspension device 20 for suspending and driving a rear wheel 82; a storage box 71 which is disposed above the engine; and a fuel tank 72 which is mounted on a rear portion of the storage box 71.

The vehicle body frame 11 includes: a head pipe 15 which is mounted on a front end of the vehicle body frame 11; a pair of left and right down frames 12 which extends downwardly from the head pipe 15; lower frames 13 which extend rearwardly from lower ends of the down frames 12 respectively; and rear frames 14 which extend upwardly and rearwardly from rear ends of the lower frames 13 respectively.

A pair of sub frames 43 is disposed along the down frames 12, and a pair of step lower frames 44 is disposed along the lower frames 13. Further, cross members (not shown in the drawing) which connect the left and right frames to each other are suitably disposed between the pair of left and right down frames 12, between the lower frames 13, and between the rear frames 14 respectively.

The front wheel suspension steering mechanism 16 includes: a front fork 17 which is steerably mounted on the head pipe 15 and supports the front wheel 81; and a bar handle 19 which is mounted on an upper end of a steering shaft 18 mounted on the front fork 17.

The suspension device 20 for mounting the unit-swing-type engine 50 on the vehicle body frame 11 includes: a link mechanism 20L which holds a front side and a lower side of the engine; and a rear cushion unit 20R which holds a rear end portion 60r of a rear wheel drive transmission part 60 arranged behind the engine.

The link mechanism 20L includes: a first link member 21; a second link member 22; and a third link member 23 described later, and supports the unit-swing-type engine 50 in a swingable manner. On the other hand, the rear cushion unit 20R is a buffer and support portion which is mounted in an extending manner between a rear end portion 60r of the rear wheel drive transmission part 60 and a rear bracket 26 of the rear frame 14.

An intake device 67 is mounted on an upper portion of the rear wheel drive transmission part 60 arranged behind the unit-swing-type engine 50. An exhaust device (not shown in the drawing) having an exhaust pipe 91 is mounted on a lower portion of the unit-swing-type engine 50.

The unit-swing-type engine 50 includes a cylinder portion 50a which extends substantially horizontally in a state where the cylinder portion 50a is directed slightly upwardly in the frontward direction of the vehicle body, and also includes the rear wheel drive transmission part 60 integrally mounted on a rear portion of the engine and having a continuously variable transmission and the like. An output shaft 60a which constitutes an axle of the rear wheel 82 is mounted on a rear end side of the rear wheel drive transmission part 60, and a drive force of a crankshaft 52a disposed in the inside of a crankcase 62 is suitably transmitted to the output shaft 60a. The scooter-type vehicle 10 includes a main stand 63 which is mounted on a lower portion of the crankcase 62.

Further, the vehicle body is suitably covered with cover members such as a handle cover 65, a front cover 69, a step floor 74, a front fender 78, a rear fender 79 and the like, and a seat 73. A head lamp 66 is mounted on a front portion of the vehicle, and a tail lamp 76 is mounted on a rear portion of the vehicle.

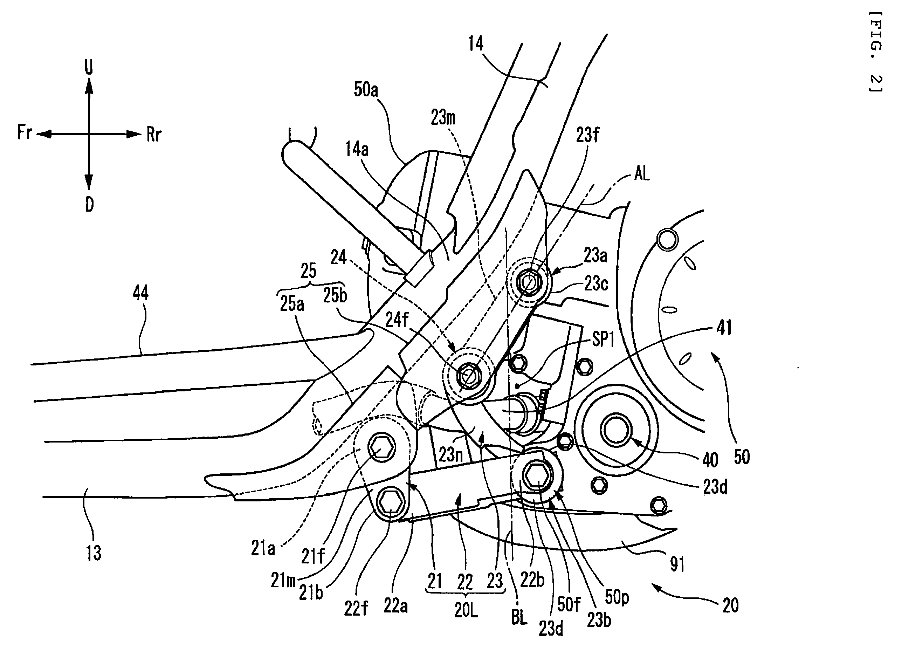

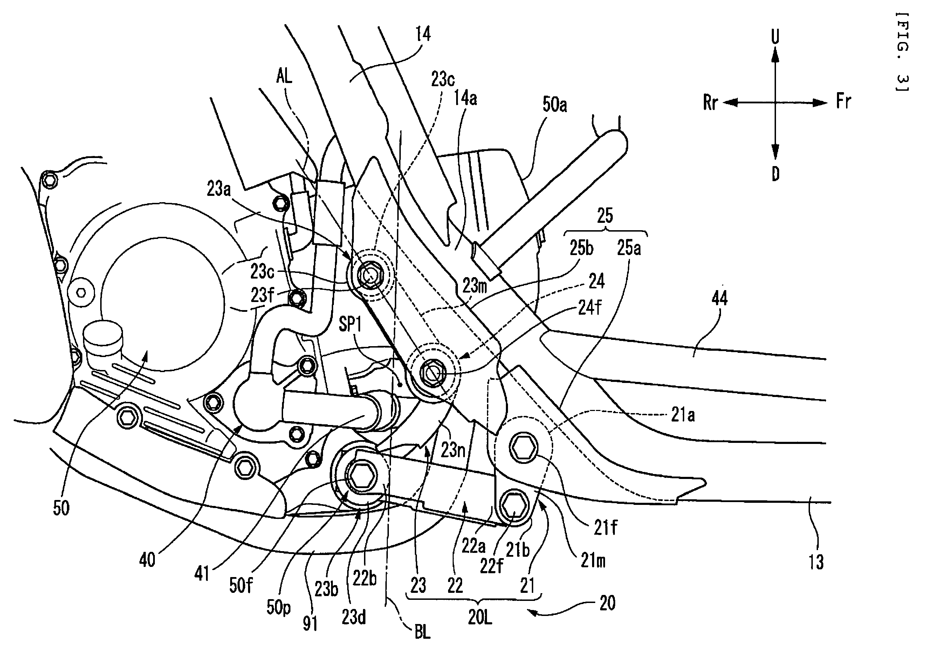

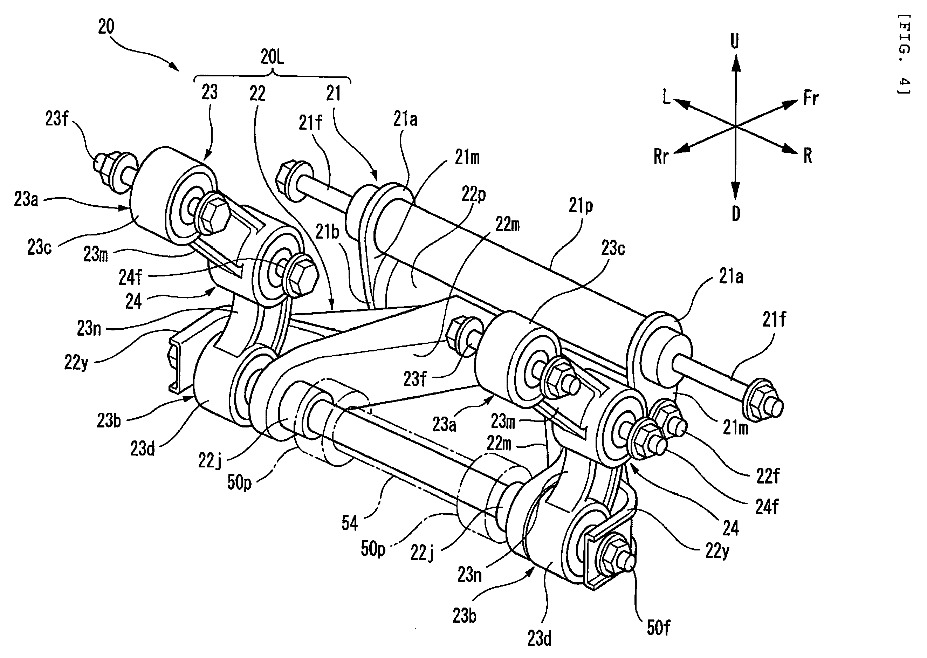

The link mechanism 20L of this embodiment is explained by reference to Fig. 2 and Fig. 3 which are enlarged views and Fig. 4 which is a perspective view.

As described previously, the link mechanism 20L is a suspension device for mounting a lower side of a front portion of the unit-swing-type engine 50 on the vehicle body frame 11. The link mechanism 20L includes three link members, that is, the first link member 21, the second link member 22 and the third link member 23, and connects a bracket 25 mounted on a rear frame inclined portion 14a and a pivot portion 50p formed on a lower side of the front portion of the engine to each other.

In Fig. 2 and Fig. 3, with respect to the first link member 21, a first link upper end portion 21a of a first link arm 21m is rotatably supported on the bracket 25 mounted on the rear frame inclined portion 14a by way of a first support shaft 21 f.

With respect to the second link member 22, a second link front end portion 22a is rotatably supported on a first link lower end portion 21b formed on a lower end side of the first link arm 21m by way of a connecting shaft 22f.

The third link member 23 has an upper arm 23m which forms an upper side of the third link member 23 and a lower arm 23n which forms a lower side of the third link member 23, and is formed into a shape which may be referred to as an L shape. A third link lower end portion 23b is rotatably supported on a second link rear end portion 22b by way of the pivot support shaft 50f of the pivot portion 50p. Due to such a constitution, the pivot portion 50p, the second link rear end portion 22b, and the third link lower end portion 23b of the third link member 23 are rotatably supported on the pivot support shaft 50f which penetrates the pivot portion 50p, the second link rear end portion 22b, and the third link lower end portion 23b.

The third link member 23 has the structure where a third link intermediate portion 24 is disposed between a third link upper end portion 23a which forms an upper end side of the third link member 23 and a third link lower end portion 23b which forms a lower end side of the third link member 23. The third link member 23 also has an upper arm 23m which extends upwardly and rearwardly from the third link intermediate portion 24, and a lower arm 23n which extends downwardly and rearwardly from the third link intermediate portion 24. The third link intermediate portion 24 and the third link upper end portion 23a are supported on the bracket 25 by way of an intermediate portion support shaft 24f and an upper end portion support shaft 23f respectively.

The third link member 23 is formed into a shape where the third link intermediate portion 24 projects toward a front side of the vehicle body and the lower arm 23n is bent frontwardly in a projecting manner as viewed in a side view. Since the upper arm 23m and the lower arm 23n extend frontwardly as described previously, the third link intermediate portion 24 is positioned in front of the third link upper end portion 23a and the third link lower end portion 23b in the longitudinal direction of the vehicle body. Accordingly, the intermediate portion support shaft 24f which supports the third link intermediate portion 24 is positioned in front of the upper end portion support shaft 23f and the pivot support shaft 50f in the longitudinal direction of the vehicle body. Also in this embodiment, the intermediate portion support shaft 24f which supports the third link intermediate portion 24 is arranged in front of a common tangent BL (see Fig. 2 and Fig. 3) which is in contact with an outer periphery of the upper end support portion 23c of the third link upper end portion 23a and an outer periphery of the lower end support portion 23d of the third link lower end portion 23b on a front side of the vehicle body.

The bracket 25 is mounted by welding on a portion where the rear frame 14 extends upwardly and rearwardly from a rear end portion of the lower frame 13, for example. In this embodiment, the bracket 25 is formed of two brackets, that is, upper and lower brackets 25a, 25b, for example. The lower bracket 25a and the upper bracket 25b are suitably connected to each other and are arranged in a partially overlapping manner. The bracket 25 is configured such that the first support shaft 21f is supported on the lower bracket 25a, and the intermediate portion support shaft 24f and the upper end portion support shaft 23f are supported on the upper bracket 25b.

As shown in Fig. 4, the first link member 21 has the structure where the first support shaft 21f penetrates a cylindrical first link shaft portion 21p, and the pair of first link arms 21m, 21m extends downwardly on both left and right end sides of the first link shaft portion 21p.

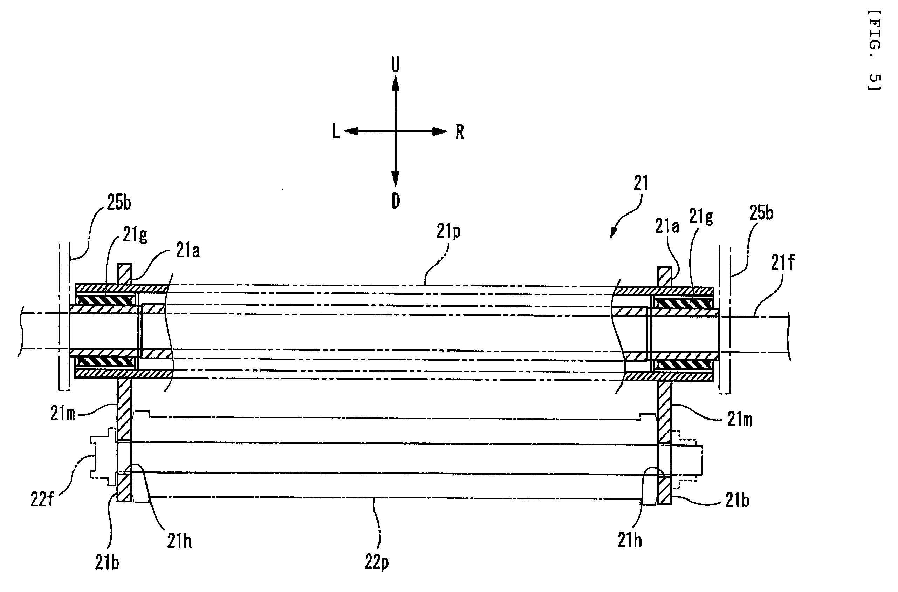

As shown in Fig. 5, the first link member 21 is mounted on the first support shaft 21f in a rotatable manner about the first support shaft 21f by way of first-link-use bushings 21 g, 21g which are suitably mounted in the first link shaft portion 21p. Arm holes 21h, 21h through which a connecting shaft 22f of the second link member 22 penetrates are formed in the first link lower end portions 21b, 21b of the first link arms 21m, 21m respectively.

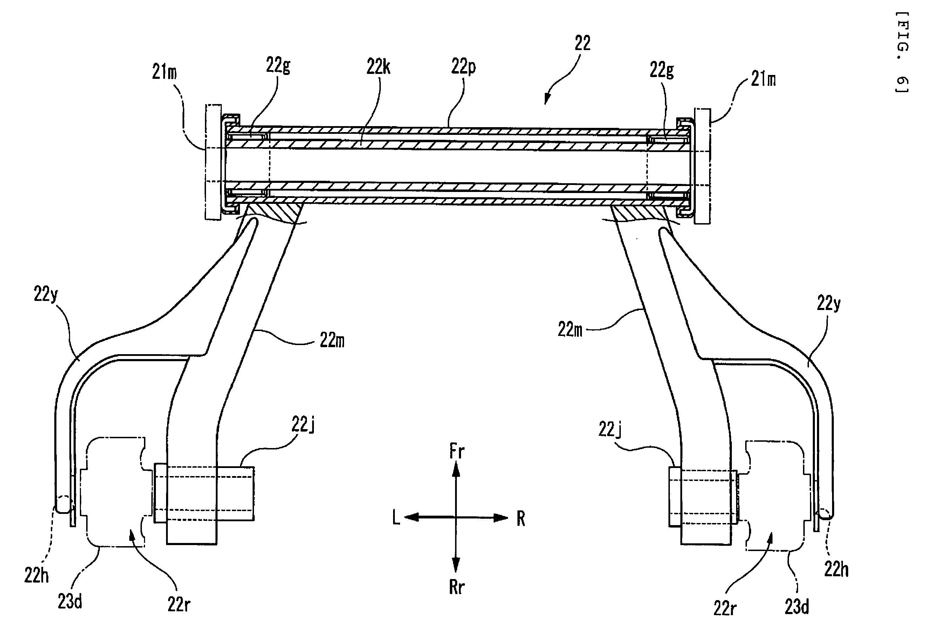

As shown in Fig. 4, the second link member 22 has the structure where the connecting shaft 22f penetrates the cylindrical second link shaft portion 22p (see Fig. 6), and the pair of second link arms 22m, 22m which extends rearwardly is provided on both left and right end sides of the second link shaft portion 22p.

As shown in Fig. 6, the second link member 22 is mounted on the connecting shaft 22f in a rotatable manner about the connecting shaft 22f by way of bearings 22g, 22g mounted in the second link shaft portion 22p and an inner collar 22k disposed between the bearings 22g, 22g. Mounting portions 22r, 22r which are connected to the third link members 23 are formed on rear end portions of the second link arms 22m, 22m respectively. The mounting portions 22r, 22r are configured such that the pivot support shaft 50f penetrates bearing bushings 22j, 22j mounted on rear end portions of the second link arms 22m, 22m and opening holes 22h, 22h formed in yoke portions 22y, 22y which extend rearwardly outside the second link arms 22m, 22m.

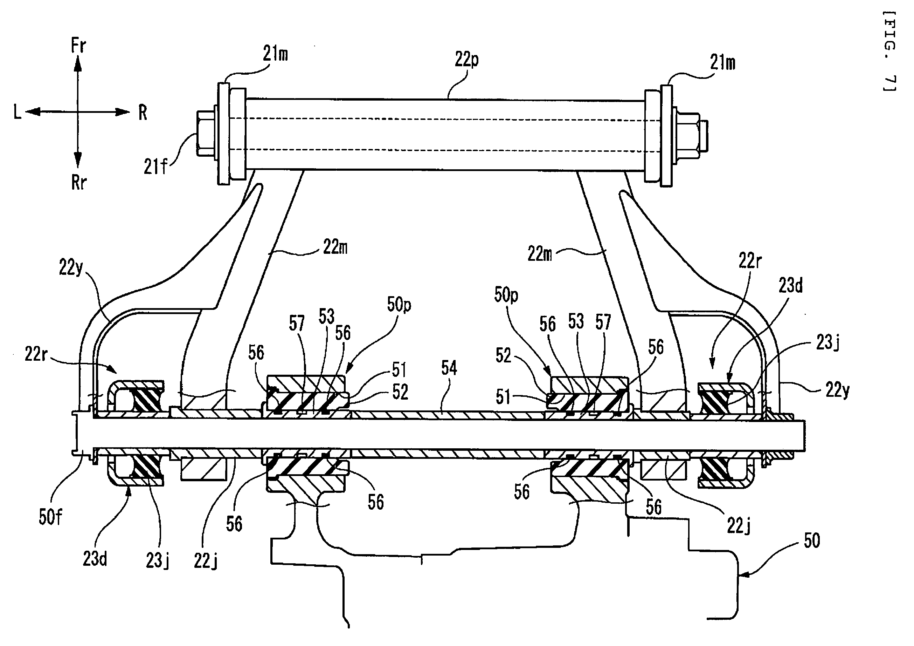

As shown in Fig. 7, the pivot support shaft 50f penetrates the mounting portions 22r, 22r formed on the rear end portions of the second link arms 22m, 22m, and the lower end support portions 23d of the third link members 23 are rotatably supported on the pivot support shaft 50f. The pivot portions 50p are rotatably supported on the pivot support shaft 50f between the mounting portions 22r, 22r. The pivot portion 50p is configured to receive the pivot support shaft 50f by providing a pivot portion bushing 52 and a collar 53 in the inside of a pair of left and right mounting holes 51, 51 respectively, for example. A distance collar 54 is disposed between the left and right collars 53, 53. A groove 57 for holding a lubricant such as grease is formed at the center of the collar 53 in the width direction, and O-rings 56, 56 are mounted on both left and right sides of the groove 57. Due to such a constitution, the relative rotation between the pivot portion bushing 52 and the collar 53 in the circumferential direction can be made smooth. The left and right lower end support portions 23d, 23d are rotatably supported on the pivot support shaft 50f by way of bushings 23j, 23j which are elastic members.

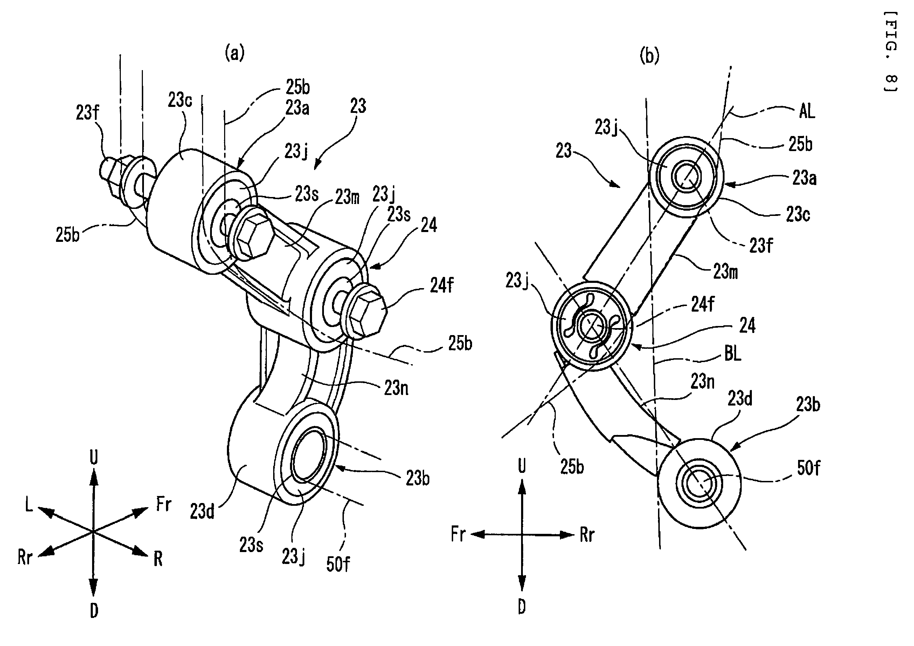

As shown in Fig. 4 and Fig. 8, the third link members 23, 23 are provided in left and right pair. As described previously, the third link members 23, 23 are bent such that the third link intermediate portions 24 project toward a front side of the vehicle body as viewed in a side view. The upper end portion support shaft 23f and the intermediate portion support shaft 24f are mounted on the upper bracket 25b (see Fig. 2), and the pivot support shaft 50f is mounted on the lower end support portions 23d, 23d and the pivot portions 50p.

Further, in the third link members 23, 23, the bushing 23j is interposed between the third link upper end portion 23a, the third link lower end portion 23b and the third link intermediate portion 24 and the support shafts 23f, 24f, 50f for supporting the third link upper end portion 23a, the third link lower end portion 23b and the third link intermediate portion 24 while interposing a metal sleeve 23s around the support shafts 23f, 24f, 50f respectively, for example.

In a state where the third link members 23, 23 are mounted, as described previously, it is not only that the intermediate portion support shaft 24f is arranged in front of the common tangent BL, it is but also that a straight connecting line AL (see Fig. 2 and Fig. 3) which connects the intermediate portion support shaft 24f and the upper end portion support shaft 23f extends in an inclined manner substantially along the rear frame inclined portion 14a.

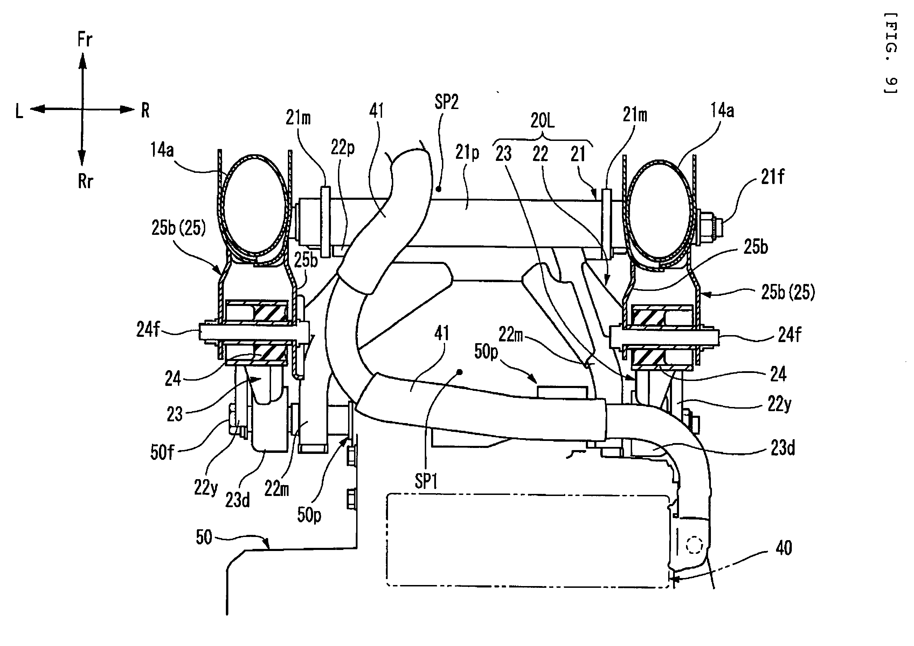

As shown in Fig. 3 and Fig. 9, a cooling water pump 40 is disposed right behind the third link members 23. Accordingly, a radiator hose 41 which extends from the cooling water pump 40 is arranged such that the radiator hose 41 extends in the lateral direction after passing through a space SP1 in a state where the radiator hose 41 overlaps with the third link member 23 on a right side, and passes through a space SP2 formed between the third link members 23, 23 (inside the third link members 23, 23) as viewed in a top plan view.

Although not shown in the drawing, members to be arranged such as other hoses can be also arranged using the spaces SP1, SP2.

As described previously, in this embodiment, in the third link member 23 of the link mechanism 20L for mounting the unit-swing-type engine 50 in a suspending manner, the third link intermediate portion 24 is formed as a bent portion which projects toward a front side in the longitudinal direction of the vehicle body. Further, the intermediate portion support shaft 24f which supports the third link intermediate portion 24 is arranged in front of the common tangent BL which is in contact with the outer periphery of the upper end support portion 23c of the third link upper end portion 23a and the outer periphery of the lower end support portion 23d of the third link lower end portion 23b on a front side in the longitudinal direction of the vehicle body. Accordingly, the third link member 23 is mounted in a bent state where the third link intermediate portion 24 is offset frontwardly. As a result, the third link member 23 of the link mechanism 20L is bent (folded) toward a front side of the vehicle above the second link member 22 extending in the longitudinal direction of the vehicle body thus being arranged compactly in a small space. Accordingly, the place where the link mechanism 20L is mounted can be positioned close to the front side of the vehicle body and hence, it is unnecessary to adopt the structure where the bracket 25 which forms a mounting portion largely extends toward a rear side of the vehicle whereby the mounting portion can be formed with a minimum size thus avoiding large-sizing of the bracket 25.

In this embodiment, the straight connecting line AL which connects the intermediate portion support shaft 24f and the upper end portion support shaft 23f which constitute mounting portions of the third link member 23 of the link mechanism 20L to be mounted on the bracket 25 to each other extends substantially along the rear frame inclined portion 14a. Accordingly, with respect to the structure of the bracket 25, the distance from the rear frame inclined portion 14a to the upper end portion support shaft 23f and the distance from the rear frame inclined portion 14a to the intermediate portion support shaft 24f can be set substantially equal and small and hence, unlike the prior art, it is unnecessary to adopt large-sizing for increasing the rigidity of the whole bracket in conformity with the longer distance from the frame thus realizing downsizing of the bracket 25.

In this embodiment, by providing the third link members 23 in left and right pair, a force necessary for supporting the engine can be made uniform by dispersing the force in the vehicle body width direction. Accordingly, unlike the prior art where the engine is supported in a cantilever manner, it is unnecessary to rigidly form the vehicle body frame 11 and the bracket 25 so as to cope with a large offset support force and hence, a weight of the vehicle body frame 11 and a weight of the bracket 25 can be reduced. Further, the cooling water pump 40 is positioned right behind the third link members 23 and hence, the whole engine can be compactly arranged on a front side. This structural arrangement contributes to the downsizing of the whole suspension structure and the downsizing of the vehicle.

In this embodiment, the radiator hose 41 extending from the cooling water pump 40 is arranged such that the radiator hose 41 passes the space SP2 disposed inside the third link members 23, 23 and, at the same time, is arranged to pass through the space SP1 where the portion of the radiator hose 41 overlaps with the bent portion of the third link member 23 vertically. Accordingly, the downsizing of the vehicle can be realized by effectively utilizing both spaces SP1, SP2 formed by the link mechanism 20L. Further, the radiator hose 41 can be protected by the third link members 23, 23.

### (Second embodiment)

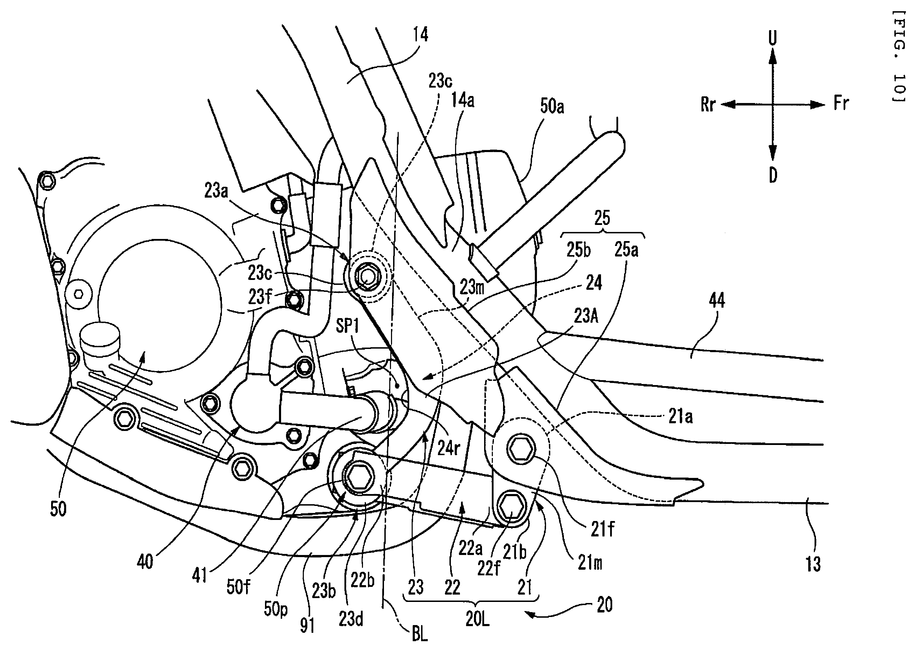

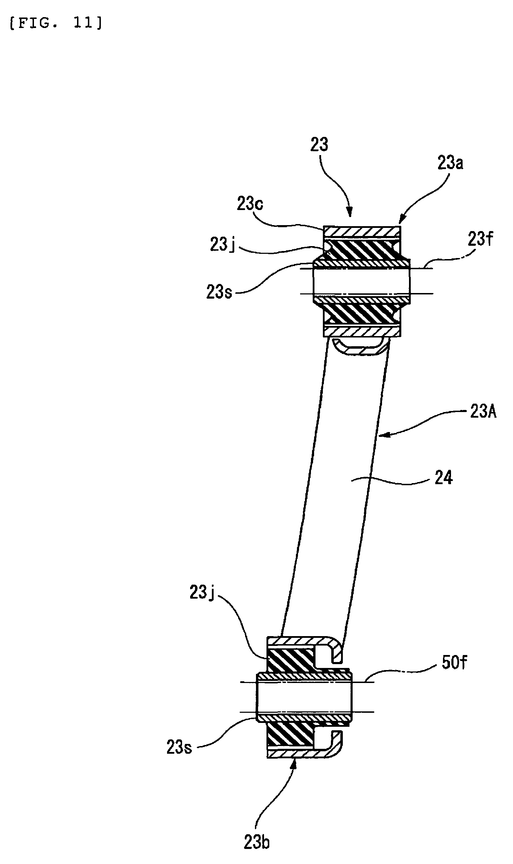

Hereinafter, a second embodiment of the invention is explained by reference to Fig. 10 and Fig. 11. In the explanation of this embodiment, constitutions substantially equal to the constitutions of the first embodiment are given the same symbols in the drawings and the explanation of the constitutions is omitted.

Fig. 10 shows the structure of a suspension device 20 on a right side. In this embodiment, however, the structure of the suspension device 20 on a left side not shown in the drawing is equal to the corresponding structure of the above-mentioned first embodiment.

On a right side of the suspension device 20 of this embodiment, a third link member 23 is formed of a bent arm 23A where a third link intermediate portion 24 between a third link upper end portion 23a and a third link lower end portion 23b is bent in a frontwardly projecting manner. The bent arm 23A is formed in a shape where a width of the bent arm 23A is gradually slightly narrowed toward a lower side thereof, and an intermediate rear end portion 24r of the third link intermediate portion 24 is arranged in front of a common tangent BL which is in contact with an outer periphery of an upper end support portion 23c of the third link upper end portion 23a and an outer periphery of a lower end support portion 23d of the third link lower end portion 23b on a front side in the longitudinal direction of the vehicle body. Accordingly, in the same manner as the third link member 23 on a left side (see Fig. 2), it is possible to form a space SP1 for arranging a hose and the like.

In this embodiment, the bent arm 23A is arranged on a right side in the vehicle width direction as described above. Accordingly, the bent arm 23A is arranged on a side opposite to a side where a rear wheel drive transmission part 60 of a unit-swing-type engine 50 (see Fig. 1 and Fig. 2) is arranged.

In the third link member 23 of this embodiment, a bushing 23j which is an elastic member having a metal sleeve 23s is interposed in the third link upper end portion 23a and the third link lower end portion 23b respectively in the same manner as the first embodiment. In this embodiment, the bushings 23j mounted in the bent arm 23A have a modulus of elasticity smaller than a modulus of elasticity of the bushings 23j mounted in the third link member 23 on a left side not shown in the drawing (see Fig. 2 and Fig. 8). That is, the modulus of elasticity of the bushings 23j mounted in the bent arm 23A is set smaller than the modulus of elasticity of the bushings 23j in the third link member 23 on a side where the rear wheel drive transmission part 60 is arranged in the vehicle width direction.

This embodiment can acquire not only advantageous effects substantially equal to the advantageous effects of the first embodiment but also the following advantageous effect. That is, with respect to one of the third link member on a left side and the third link member on a right side, the third link intermediate portion disposed between the third link upper end portion and the third link lower end portion is formed of a bent arm which is bent so as to project frontwardly without being supported on a vehicle body frame. Accordingly, it is unnecessary to provide a member for fixing the third link intermediate portion. This structure also contributes to the reduction of weight of the suspension device.

The bent arm of this embodiment is disposed on a side opposite to a side where the rear wheel drive transmission part of the unit-swing-type engine is arranged in the vehicle width direction. Accordingly, rigidity of the suspension device for supporting the engine can be increased by providing the structure where the third link intermediate portion is fixed on a left side in the vehicle width direction, for example, where the unit-swing-type engine is arranged. At the same time, a distance between the support portions can be increased by the bent arm provided on a right side in the vehicle width direction and hence, it is possible to impart flexibility to the suspension device whereby it is possible to provide the structure which easily absorbs vibrations.

In this embodiment, a modulus of elasticity of the elastic member mounted in the third link member is set smaller than a modulus of elasticity of the elastic member on a side where the rear wheel drive transmission part is arranged in the vehicle width direction. By making use of the difference in flexibility of the elastic member between the left and right sides in the vehicle width direction, the function of the suspension device for supporting the unit-swing-type engine can be divided into a side where the suspension device exhibits a rigidity function and a side where the suspension device exhibits flexibility. This structure can contribute to the enhancement of vehicle performance.

Although the embodiments of the invention have been explained heretofore, the invention is not limited to these embodiments, and can be modified as desired. For example, although the bracket 25 is constituted of two parts of the upper and lower parts, these two parts of the upper and lower parts may be formed into an integral body. The bracket 25 may adopt the structure where the bracket 25 is split in three vertically corresponding to the respective support shafts. A bent shape of the third link member 23 and a size of bending of the third link member 23 may be also set as desired. The bearing structures for supporting the support shafts in the link mechanism 20L are not limited to the bearing structures used in the above-mentioned embodiments.

### Description of Reference Numerals and Signs

10: scooter type vehicle (saddle-ride-type vehicle)
11: vehicle body frame
15: head pipe
12: down frame
13 lower frame
14: rear frame
14a: rear frame inclined portion
20: suspension device
20L: link mechanism
21: first link member
21a: first link upper end portion
21b: first link lower end portion
21f: first support shaft
22: second link member
22a: second link front end portion
22b: second link rear end portion
22f: connecting shaft
23, 23A: third link member
23a: third link upper end portion
23b: third link lower end portion
23c: upper end support portion
23d: lower end support portion
23f: upper end portion support shaft
23j: bushing (elastic member)
24: third link intermediate portion
24f: intermediate portion support shaft
24r: intermediate rear end portion
40: cooling water pump
41: radiator hose
50: unit-swing-type engine
50p: pivot portion
81: front wheel
82: rear wheel
BL: common tangent
AL: straight connecting line

## Claims

1. A suspension device (20) for a saddle-ride-type vehicle (10) comprising:
a vehicle body frame (11) having:
a down frame (12) extending downwardly from a head pipe (15);
a lower frame (13) extending rearwardly from a lower end of the down frame (12); and
a rear frame (14) extending upwardly and rearwardly from a rear end of the lower frame (13);
a unit-swing-type engine (50) which imparts a drive force to a rear wheel (82); and
a link mechanism (20L) for mounting the unit-swing-type engine (50) on the vehicle body frame (11) in a suspending manner, wherein
the link mechanism (20L) includes:
a first link member (21) having a first link upper end portion (21a) thereof rotatably supported on the vehicle body frame (11);
a second link member (22) having a second link front end portion (22a) thereof rotatably supported on a first link lower end portion (21b) of the first link member (21); and
a third link member (23) having a third link lower end portion (23b) thereof rotatably supported on a second link rear end portion (22b) of the second link member (22),
a pivot portion (50p) of the unit-swing-type engine (50) is supported on the second link rear end portion (22b),
a third link upper end portion (23a) of the third link member (23) and a third link intermediate portion (24) disposed between the third link upper end portion (23a) and the third link lower end portion (23b) are supported on the vehicle body frame (11),
the third link intermediate portion (24) is formed in a frontwardly projecting manner, and
an intermediate portion support shaft (24f) which supports the third link intermediate portion (24) is arranged in front of a common tangent (BL) which is in contact with an outer periphery of an upper end support portion (23c) of the third link upper end portion (23a) and an outer periphery of a lower end support portion (23d) of the third link lower end portion (23b) on a front side in the longitudinal direction of the vehicle body.

2. The suspension device (20) for a saddle-ride-type vehicle (10) according to claim 1, wherein a straight connecting line (AL) which connects the intermediate portion support shaft (24f) and the upper end portion support shaft (23f) extends substantially along a rear frame inclined portion (14a) extending toward a position above and behind the rear frame (14).

3. The suspension device (20) for a saddle-ride-type vehicle (10) according to claim 1 or claim 2,
wherein a pair of left and right third link members (23) is provided, and
a cooling water pump (40) is disposed right behind the third link members (23).

4. The suspension device (20) for a saddle-ride-type vehicle (10) according to claim 3, wherein a radiator hose (41) extending from the cooling water pump (40) is arranged such that the radiator hose (41) passes along a vehicle body inner side of the third link members (23) and a portion of the radiator hose (41) overlaps with the third link member (23) as viewed in a top plan view.

5. A suspension device (20) for a saddle-ride-type vehicle (10) comprising:
a vehicle body frame (11) having:
a down frame (12) extending downwardly from a head pipe (15);
a lower frame (13) extending rearwardly from a lower end of the down frame (12); and
a rear frame (14) extending upwardly and rearwardly from a rear end of the lower frame (13);
a unit-swing-type engine (50) which imparts a drive force to a rear wheel (82); and
a link mechanism (20L) for mounting the unit-swing-type engine (50) on the vehicle body frame (11) in a suspending manner, wherein
the link mechanism (20L) includes:
a pair of left and right first link members (21) each having a first link upper end portion (21a) thereof rotatably supported on the vehicle body frame (11);
a pair of left and right second link members (22) each having a second link front end portion (22a) thereof rotatably supported on a first link lower end portion (21b) of the first link member (21); and
a pair of left and right third link members (23) each having a third link lower end portion (23b) thereof rotatably supported on a second link rear end portion (22b) of the second link member (22),
a pivot portion (50p) of the unit-swing-type engine (50) is supported on the second link rear end portion (22b),
one third link member (23) has a third link upper end portion (23a) thereof and a third link intermediate portion (24) thereof disposed between the third link upper end portion (23a) and the third link lower end portion (23b) supported on the vehicle body frame (11),
the third link intermediate portion (24) is formed in a frontwardly projecting manner,
an intermediate portion support shaft (24f) which supports the third link intermediate portion (24) is arranged in front of a common tangent (BL) which is in contact with an outer periphery of an upper end support portion (23c) of the third link upper end portion (23a) and an outer periphery of a lower end support portion (23d) of the third link lower end portion (23b) on a front side in the longitudinal direction of the vehicle body,
the other third link member (23) is formed of a bent arm (23A) which is bent such that the third link intermediate portion (24) between the third link upper end portion (23a) and the third link lower end portion (23b) projects toward a front side, and
an intermediate rear end portion (24r) of the third link intermediate portion (24) is arranged in front of a common tangent (BL) which is in contact with an outer periphery of the upper end support portion (23c) of the third link upper end portion (23a) and an outer periphery of the lower end support portion (23d) of the third link lower end portion (23b) on a front side in the longitudinal direction of the vehicle body.

6. The suspension device (20) for a saddle-ride-type vehicle (10) according to claim 5, wherein the bent arm (23A) is disposed on a side opposite to a side where a rear wheel drive transmission part (60) of the unit-swing-type engine (50) is arranged in a vehicle width direction.

7. The suspension device (20) for a saddle-ride-type vehicle (10) according to claim 6, wherein a modulus of elasticity of an elastic member (23j) mounted in the third link member (23) is set smaller than a modulus of elasticity of an elastic member on a side where the rear wheel drive transmission part (60) is arranged in a vehicle width direction.

## Patentansprüche

1. Aufhängungsvorrichtung (20) für ein Fahrzeug (10) vom Sattelfahrtyp, aufweisend:
einen Fahrzeugrahmen (11), der hat:
einen Abwärtsrahmen (12), der sich von einem Kopfrohr (15) aus abwärts erstreckt;
einen unteren Rahmen (13), der sich nach hinten von einem untere Ende des Abwärtsrahmens (12) aus erstreckt; und
einen hinteren Rahmen (14), der sich nach oben und hinten von einem hinteren Ende des unteren Rahmens aus erstreckt;
einen Motor (50) vom Typ einer Schwingeinheit, die eine Antriebskraft an ein hinteres Rad (82) übermittelt; und
einen Verbindungsmechanismus (20L) zum Montieren des Motors (50) vom Typ einer Schwingeinheit an dem Fahrzeugrahmen (11) in einer aufhängenden Weise, wobei
der Verbindungmechanismus (20L) umfasst:
ein erstes Verbindungselement (21), das einen oberen Erste-Verbindung-Endbereich (21 a) hat, der drehbar von dem Fahrzeugrahmen (11) getragen wird;
ein zweites Verbindungselement (22), das einen vorderen Zweite-Verbindung-Endbereich (22a) hat, der drehbar an einem unteren Erste-Verbindung-Endbereich (21 b) des ersten Verbindungselements (21) getragen wird; und
ein drittes Verbindungselement (23), das einen unteren Dritte-Verbindung-Endbereich (23b) hat, der drehbar an dem hinteren Zweite-Verbindung-Endbereich (22b) des zweiten Verbindungselements (22) getragen wird,
einen Drehabschnitt (50p) des Motors (50) vom Typ einer Schwingeinheit, der von dem hinteren Zweite-Verbindung-Endbereich (22b) gestützt wird,
einen oberen Dritte-Verbindung-Endbereich (23a) des dritten Verbindungselements (23) und einen Dritte-Verbindung- Zwischenbereich (24), der zwischen dem oberen Dritte-Verbindung-Endbereich (23a) und dem unteren Dritte-Verbindung-Endbereich (23b) angeordnet ist, die von dem Fahrzeugrahmen (11) gestützt werden,
wobei der Dritte-Verbindung-Zwischenbereich (24) in einer nach vorn vorstehenden Weise gebildet ist und eine Zwischenbereich-Stützachse (24f), die den Dritte-Verbindung-Endbereich (24) stützt, vor einer gemeinsamen Tangente angeordnet ist, die in Kontakt mit einem äußeren Umfang eines Oberes-Ende-StützAbschnitts (23c) des Dritte-Verbindung-Endbereichs (23a) und einem äußeren Umfang des Unteres-Ende-Stützabschnitts (23d) des unteren Dritte-Verbindung-Endbereichs (23b) an einer vorderen Seite in der Längsrichtung der Fahrzeugkarosserie in Kontakt ist.

2. Aufhängungsvorrichtung (20) für ein Fahrzeug (10) vom Sattelfahrtyp gemäß Anspruch 1, wobei eine gerade Verbindungslinie (AL), die die Zwischenbereichs-Stützachse (24f) und die Oberer-Endbereich-Stützachse (23f) verbindet, sich im Wesentlichen entlang eines geneigten Abschnitts (14a) des hinteren Rahmens erstreckt, der sich auf eine Position oberhalb und hinter dem hinteren Rahmen (14) zu erstreckt.

3. Aufhängungsvorrichtung (20) für ein Fahrzeug (10) vom Sattelfahrtyp gemäß Anspruch 1 oder 2, wobei ein Paar von linken und rechten Verbindungselementen (23) vorgesehen ist und eine Kühlwasserpumpe (40) unmittelbar hinter den dritten Verbindungselementen (23) angeordnet ist.

4. Aufhängungsvorrichtung (20) für ein Fahrzeug (10) vom Sattelfahrtyp gemäß Anspruch 3, wobei ein Kühlerschlauch (41), der sich von der Kühlwasserpumpe (40) erstreckt, so angeordnet ist, dass der Kühlerschlauch (41) entlang einer Fahrzeugkarosserieinnenseite des dritten Verbindungselements (23) verläuft und ein Abschnitt des Kühlerschlauchs (41) mit dem dritten Verbindungselement (23) in einer Draufsicht überlappt.

5. Aufhängungsvorrichtung (20) für ein Fahrzeug (10) vom Sattelfahrtyp, aufweisend:
einen Fahrzeugrahmen (11), der hat:
einen Abwärtsrahmen (12), der sich abwärts von einem Kopfrohr (15) aus erstreckt;
einen unteren Rahmen (13), der sich nach hinten von einem unteren Ende des Abwärtsrahmens (12) aus erstreckt; und
einen hinteren Rahnen (14), der sich nach oben und hinten von einem hinteren Ende des unteren Rahmens (13) aus erstreckt;
einen Motor (50) vom Typ einer Schwingeinheit, die einen Antriebskraft auf ein hinteres Rad (82) überträgt; und
einen Verbindungsmechanismus (20L) zum Montieren des Motors (50) vom Typ einer Schwingeinheit an dem Fahrzeugrahmen (11) in einer aufhängenden Weise, wobei der Verbindungsmechanismus (20L) umfasst:
ein paar von linken und rechten ersten Verbindungselementen (23), die jeweils einen oberen Erste-Verbindung-Endbereich (21a) haben, der drehbar von dem Fahrzeugrahmen (11) getragen wird;
ein Paar von linken und rechten zweiten Verbindungselementen (22), die jeweils einen vorderen Zweite-Verbindung-Endbereich (22a) haben, der drehbar an dem unteren Erste-Verbindung-Endbereich (21b) des ersten Verbindungselements (21) gestützt wird; und
ein Paar von linken und rechten dritten Verbindungselementen (23), die jeweils einen unteren Dritte-Verbindung-Endbereich (23b) haben, der drehbar von einem hinteren Zweite-Verbindung-Endbereich (22b) des zweiten Verbindungselements (22) gestützt wird;
einen Drehbereich (50p) des Motors (50) vom Typ einer Schwingeinheit, der von dem hinteren Zweite-Verbindung-Endbereich (22b) gestützt wird,
ein drittes Verbindungselement (23), das einen oberen Dritte-Verbindung-Endbereich (23a) hat und einen Dritte-Verbindung-Zwischenbereich (24), der zwischen dem oberen Dritte-Verbindung-Endbereich (23a) und dem unteren Dritte-Verbindung-Endbereich (23b) an dem Fahrzeugrahmen (11) gestützt wird,
wobei der Dritte-Verbindung-Zwischenbereich (24) in einer nach vorne vorstehenden Weise gebildet ist,
eine Zwischenbereichs-Stützachse (24f), die den Dritte-Verbindung-Zwischenbereich (24) stützt von einer gemeinsamen Tangente (BL) angeordnet ist, die in Kontakt mit einem äußeren Umfang eines ein oberes Ende stützenden Bereichs (23c) des oberen Dritte-Verbindung-Endbereich s (23a) und mit einem äußeren Umfang eines ein unteres Ende stützenden Bereichs (23b) des unteren Dritte-Verbindung-Endbereichs (23b) an einer Vorderseite in der Längsrichtung der Fahrzeugkarosserie ist,
das andere dritte Verbindungselement (23) von einem gebogenen Arm (23A) gebildet wird, der so gebogen ist, dass der Zwischenbereich (24) der dritten Verbindung zwischen dem oberen Dritte-Verbindung-Endbereich (23a) und dem unteren Dritte-Verbindung-Endbereich (23b) auf eine Frontseite zu vorsteht, und
ein mittlerer Hinteres-Ende-Bereich (24r) des Dritte-Verbindung-Zwischenbereichs (24) vor der gemeinsamen Tangente (BL) angeordnet ist, die auf einer Vorderseite in der Längsrichtung der Fahrzeugkarosserie in Kontakt mit einem äußeren Umfang des oberen Ende-Stützbereichs (23c) des oberen Dritte-Verbindung-Endbereich s (23a) und einem äußeren Umfang des Unteres-Ende-Stützbereichs (23d) des unteren Dritte-Verbindung-Endbereichs (23b) ist.

6. Aufhängungsvorrichtung (20) für ein Fahrzeug (10) vom Sattelfahrtyp gemäß Anspruch 5, wobei der gebogene Arm (23) in der Fahrzeugbreitenrichtung an einer Seite gegenüber einer Seite, an der ein Hinterradgetriebeteil (60) des Motors (50) vom Typ einer Schwingeinheit angeordnet ist.

7. Aufhängungsvorrichtung (20) für ein Fahrzeug (10) vom Sattelfahrtyp gemäß Anspruch 6, wobei ein Elastizitätsmodul eines elastischen Elements (23j), das in dem dritten Verbindungselement (23) montiert ist, kleiner eingestellt ist als ein Elastizitätsmodul eines elastischen Elements auf einer Seite in der Fahrzeugbreitenrichtung, an der das Hinterradantriebsgetriebeteil (60) angeordnet ist.

## Revendications

1. Dispositif de suspension (20) pour un véhicule de type à selle (10) comprenant :
une ossature de carrosserie de véhicule (11) comportant :
une ossature basse (12) s'étendant vers le bas d'un tube de direction (15) ;
une ossature inférieure (13) s'étendant vers l'arrière d'une extrémité inférieure de l'ossature basse (12) ; et
une ossature arrière (14) s'étendant vers le haut et vers l'arrière d'une extrémité arrière de l'ossature inférieure (13) ;
un moteur de type à oscillation unitaire (50) qui communique une force d'entraînement à une roue arrière (82) ; et
un mécanisme de lien (20L) permettant de monter le moteur de type à oscillation unitaire (50) sur l'ossature de carrosserie de véhicule (11) à la manière d'une suspension, dans lequel
le mécanisme de lien (20L) inclut :
un premier organe de lien (21) comportant une première portion d'extrémité supérieure de lien (21a) supportée avec faculté de rotation sur l'ossature de carrosserie de véhicule (11) ;
un deuxième organe de lien (22) comportant une seconde portion d'extrémité avant de lien (22a) supportée avec faculté de rotation sur la première portion d'extrémité inférieure de lien (21b) du premier organe de lien (21) ; et
un troisième organe de lien (23) ayant une troisième portion d'extrémité inférieure de lien (23b) supportée avec faculté de rotation sur une seconde portion d'extrémité arrière de lien (22b) du second organe de lien (22),
une portion pivot (50p) du moteur de type à oscillation unitaire (50) est supportée sur la seconde portion d'extrémité arrière de lien (22b),
une troisième portion d'extrémité supérieure de lien (23a) du troisième organe de lien (23) et une troisième portion intermédiaire de lien (24) disposée entre la troisième portion d'extrémité supérieure de lien (23a) et la troisième portion d'extrémité inférieure de lien (23b) sont supportées sur l'ossature de carrosserie de véhicule (11),
la troisième portion intermédiaire de lien (24) est formée de manière à faire saillie vers l'avant, et
un arbre de support de portion intermédiaire (24f) qui supporte la troisième partie intermédiaire de lien (24) est agencé en face d'une tangente commune (BL) qui est en contact avec une périphérie externe d'une portion de support d'extrémité supérieure (23c) de la troisième portion d'extrémité supérieure de lien (23a) et une périphérie externe d'une portion de support d'extrémité inférieure (23d) de la troisième portion d'extrémité inférieure de lien (23b) sur un côté avant dans la direction longitudinale de la carrosserie de véhicule.

2. Dispositif de suspension (20) pour un véhicule de type à selle (10) selon la revendication 1, dans lequel une droite de liaison (AL) qui relie l'arbre de support de portion intermédiaire (24f) et l'arbre de support de portion d'extrémité supérieure (23f) s'étend sensiblement le long d'une portion inclinée d'ossature arrière (14a) s'étendant vers une position au-dessus et derrière l'ossature arrière (14).

3. Dispositif de suspension (20) pour un véhicule de type à selle (10) selon la revendication 1 ou la revendication 2, dans lequel une paire de troisièmes organes de lien gauche et droit (23) est prévue, et une pompe d'eau de refroidissement (40) est disposée juste derrière les troisièmes organes de lien (23).

4. Dispositif de suspension (20) pour un véhicule de type à selle (10) selon la revendication 3, dans lequel un tuyau de radiateur (41) s'étendant depuis la pompe d'eau de refroidissement (40) est agencé de telle sorte que le tuyau de radiateur (41) passe le long d'un côté interne de la carrosserie du véhicule des troisièmes organes de lien (23) et une portion du tuyau de radiateur (41) chevauche le troisième organe de lien (23) dans une vue en plan de dessus.

5. Dispositif de suspension (20) pour un véhicule de type à selle (10) comprenant :
une ossature de carrosserie de véhicule (11) comportant :
une ossature basse (12) s'étendant vers le bas d'un tube de direction (15) ;
une ossature inférieure (13) s'étendant vers l'arrière d'une extrémité inférieure de l'ossature basse (12) ; et
une ossature arrière (14) s'étendant vers le haut et vers l'arrière d'une extrémité arrière de l'ossature inférieure (13) ;
un moteur de type à oscillation unitaire (50) qui communique une force d'entraînement à une roue arrière (82) ; et
un mécanisme de lien (20L) permettant de monter le moteur de type à oscillation unitaire (50) sur l'ossature de carrosserie de véhicule (11) à la manière d'une suspension, dans lequel
le mécanisme de lien (20L) inclut :
une paire de premiers organes de lien gauche et droit (21) ayant chacun une première portion d'extrémité supérieure de lien (21a) supportée avec faculté de rotation sur l'ossature de carrosserie de véhicule (11) ;
une paire de deuxièmes organes de lien gauche et droit (22) ayant chacun une seconde portion d'extrémité avant de lien (22a) supportée avec faculté de rotation sur une première portion d'extrémité inférieure de lien (21b) du premier organe de lien (21) ; et
une paire de troisièmes organes de lien gauche et droit (23) ayant chacun une troisième portion d'extrémité inférieure de lien (23b) supportée avec faculté de rotation sur une seconde portion d'extrémité arrière de lien (22b) du second organe de lien (22),
une portion pivot (50p) du moteur de type à oscillation unitaire (50) est supportée sur la seconde portion d'extrémité arrière de lien (22b),
un troisième organe de lien (23) comporte une troisième portion d'extrémité supérieure de lien (23a) et une troisième portion intermédiaire de lien (24) disposée entre la troisième portion d'extrémité supérieure de lien (23a) et la troisième portion d'extrémité inférieure de lien (23b) supportée sur l'ossature de carrosserie de véhicule (11),
la troisième portion intermédiaire de lien (24) est formée en faisant saillie vers l'avant,
un arbre de support de portion intermédiaire (24f) qui supporte la troisième partie intermédiaire de lien (24) est agencé en face d'une tangente commune (BL) qui est en contact avec une périphérie externe d'une portion de support d'extrémité supérieure (23c) de la troisième portion d'extrémité supérieure de lien (23a) et une périphérie externe d'une portion de support d'extrémité inférieure (23d) de la troisième portion d'extrémité inférieure de lien (23b) sur un côté avant dans la direction longitudinale de la carrosserie de véhicule,
l'autre troisième organe de lien (23) est formé d'un bras courbé (23A) qui est courbé de telle sorte que la troisième portion intermédiaire de lien (24) entre la troisième portion d'extrémité supérieure de lien (23a) et la troisième portion d'extrémité inférieure de lien (23b) fasse saillie vers un côté avant, et
une portion d'extrémité arrière intermédiaire (24r) de la troisième portion intermédiaire de lien (24) est agencée en face d'une tangente commune (BL) qui est en contact avec une périphérie externe de la portion de support d'extrémité supérieure (23c) de la troisième portion d'extrémité supérieure de lien (23a) et une périphérie externe de la portion de support d'extrémité inférieure (23d) de la troisième portion d'extrémité inférieure de lien (23b) sur un côté avant dans la direction longitudinale de la carrosserie du véhicule.

6. Dispositif de suspension (20) pour un véhicule de type à selle (10) selon la revendication 5, dans lequel le bras courbé (23A) est disposé sur un côté opposé à un côté où une partie de transmission d'entraînement de roue arrière (60) du moteur de type à oscillation unitaire (50) est agencée dans une direction de la largeur du véhicule.

7. Dispositif de suspension (20) pour un véhicule de type à selle (10) selon la revendication 6, dans lequel un module d'élasticité d'un organe élastique (23j) monté dans le troisième organe de lien (23) est fixé plus petit qu'un module d'élasticité d'un organe élastique sur un côté où la partie de transmission d'entraînement de roue arrière (60) est agencée dans une direction de la largeur du véhicule.
